Europäisches Patentamt

European Patent Office

Office européen des brevets

(11) Numéro de publication: **0 412 444 B1**

(12) **FASCICULE DE BREVET EUROPEEN**

(45) Date de publication de fascicule du brevet: **12.10.94** (51) Int. Cl.5: **B60C 23/04**, H01R 13/52

(21) Numéro de dépôt: **90114908.8**

(22) Date de dépôt: **03.08.90**

(54) **Connecteur électrique et ensemble comportant un connecteur électrique et un contact associé.**

(30) Priorité: **10.08.89 FR 8910864**

(43) Date de publication de la demande:
**13.02.91 Bulletin 91/07**

(45) Mention de la délivrance du brevet:
**12.10.94 Bulletin 94/41**

(84) Etats contractants désignés:
**AT BE CH DE DK ES FR GB GR IT LI LU NL SE**

(56) Documents cités:
**FR-A- 2 564 783**
**FR-A- 2 605 938**
**US-A- 2 824 183**
**US-A- 3 577 208**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **Gesta, Jean-Louis**
**7 bis, rue des Rouchats**
**F-63119 Chateaugay (FR)**

(74) Mandataire: **Bauvir, Jacques et al**
**Michelin & Cie,**
**Service SRK Brevets**
**23, Place des Carmes**
**F-63040 Clermont-Ferrand Cédex (FR)**

Rank Xerox (UK) Business Services
(3.10/3.09/3.3.3)

## Description

La présente invention se rapporte aux connecteurs électriques. En particulier, elle concerne un type de connecteur électrique utilisable notamment dans l'industrie automobile, par exemple pour les liaisons électriques entre roues et support de roue.

L'implantation sur les roues de véhicules de composants électriques nécessaires pour assurer la surveillance des pneumatiques impose de prévoir des lignes électriques cheminant du pneumatiquevers le véhicule. Que la liaison entre la roue et le véhicule se fasse par contact galvanique glissant, ou tournant, il faut implanter sur la roue des fils électriques et parfois des connecteurs, notamment si l'antenne mobile en rotation n'est plus attachée à la roue, mais au moyeu ou au tambour de frein. Dans ce cas, il faut implanter des connecteurs électriques entre la roue et le moyeu, afin de pouvoir séparer aisément la roue du moyeu lors de chaque démontage de la roue.

Il se pose alors le problème de concevoir un connecteur électrique qui puisse fonctionner avec grande fiabilité dans un milieu très agressif. Il faut encore que l'utilisation de ce connecteur soit aussi simple que possible et que les opérations de branchement et débranchement successives ne le dégradent pas. Enfin, il convient d'éviter de devoir régler l'angle de présentation de la roue par rapport au moyeu lors de chaque montage, afin que l'opération de montage de la roue ne soit pas trop fastidieuse.

Selon l'invention, le dispositif de connexion comporte au moins deux connecteurs électriques destinés à être reliés de façon permanente en parallèle avec un fil conducteur d'une part, et à réaliser d'autre part une connexion galvanique séparable avec un seul contact associé, ledit connecteur électrique comporte deux étages conducteurs, le premier des étages conducteurs étant destiné à être relié audit fil conducteur et étant isolé galvaniquement de l'extérieur du connecteur, le second étage conducteur, accessible par l'extérieur dudit connecteur, étant destiné à effectuer ladite connexion galvanique séparable, le second étage conducteur étant isolé galvaniquement dudit premier étage conducteur lorsque connecteur et contact associé sont séparés, et étant mis en contact galvanique par le contact associé lorsque connecteur et contact associé sont branchés l'un à l'autre.

Grâce à cette conception qui permet de ne mettre sous tension la pastille conductrice accessible de l'extérieur du connecteur que si le connecteur est branché à son contact associé, on peut très aisément multiplier les connecteurs de ce genre sur la roue, ou sur le moyeu. On les raccorde tous en parallèle mais seule la pastille de celui des connecteurs qui sera branché à un contact associé sera mise sous tension. Pour tous les autres connecteurs, la pastille, qui est la seule pièce conductrice accessible de l'extérieur, reste isolée galvaniquement des circuits électriques raccordés. Ainsi, l'humidité ne peut provoquer aucun mauvais fonctionnement en créant un chemin conducteur parasite vers la masse. Bien entendu, au niveau du connecteur utilisé, il est fort commode de prévoir une parfaite étanchéité, par exemple en implantant les moyens nécessaires sur le contact associé.

En outre, on peut concevoir de nombreuses autres applications du connecteur selon l'invention. Ainsi, on peut réaliser des prises pour liaisons électriques entre véhicule tracteur et remorque, ou entre remorques. Si un attelage n'est pas utilisé, la prise placée sur le véhicule tracteur ne présentera aucun contact sous tension. Il en résulte une bien plus grande fiabilité de fonctionnement de l'installation électrique du véhicule tracteur puisque, en atmosphère humide, aucun contact électrique accessible de l'extérieur n'est sous tension si la prise électrique reste inutilisée. Les seuls contacts électriques sous tensions restent enfermés dans une enceinte parfaitement étanche.

Les prises pour le diagnostic des véhicules constituent encore un autre exemple d'application. En général, chaque fois qu'il se pose le problème de concevoir un connecteur électrique qui soit susceptible de rester débranché en milieu humide, l'invention peut trouver une application judicieuse.

La description qui suit illustre seulement l'invention appliquée à la réalisation d'un connecteur pour roues de véhicules. Il s'agit bien sûr d'un exemple non limitatif. Les figures jointes illustrent la description, font apparaître différentes variantes et permettent de bien comprendre tous les avantages de l'invention.

La figure 1 est une coupe montrant le connecteur ;

La figure 2 illustre l'implantation d'un système de surveillance d'un pneumatique ;

La figure 3 est une coupe montrant le connecteur branché à un contact associé ;

La figure 4 montre un perfectionnement au contact associé ;

La figure 5 montre une variante du connecteur spécifiquement adaptée aux roues jumelées.

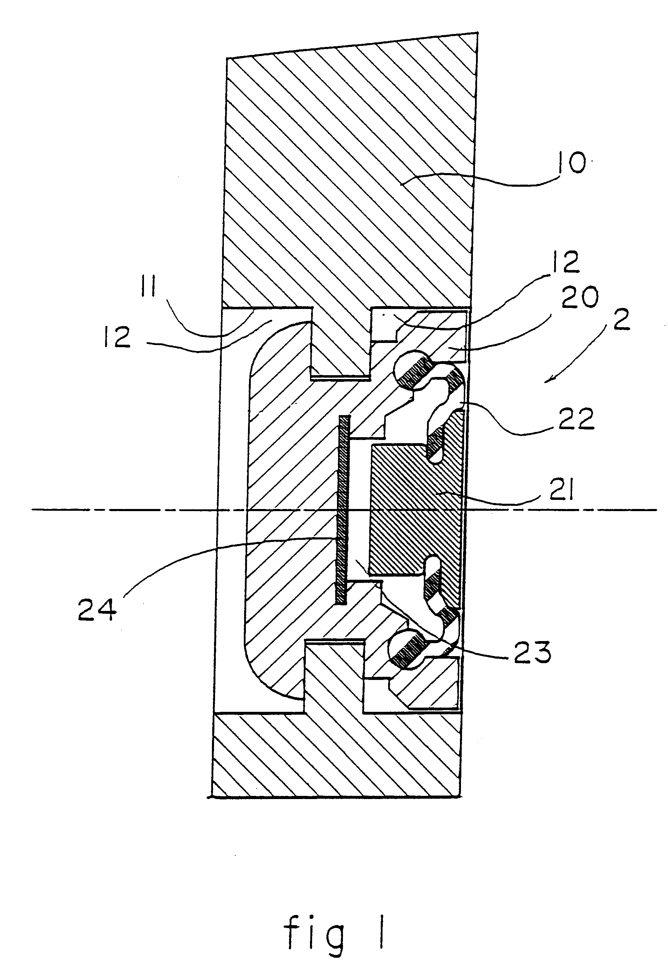

A la figure 1, on voit partiellement un disque 10 de roue pour Poids lourds, sur lequel on a prévu un perçage 11 muni de deux lamages 12. Le connecteur 2 comporte un support isolant 20 laissant apparaître, visible de l'extérieur du connecteur 2, une pastille 21 conductrice constituant le second étage conducteur, lequel est acccessible de l'extérieur du connecteur 2. La pastille 21 est fixée sur le support 20 par une membrane élastique et étanche 22, réalisée indifféremment en matériau conducteur ou en matériau isolant. Il apparaît ainsi une cavité 23 délimitée par le support 20, la pastille 21, et la membrane 22. Le pôle 24 constitue le premier étage conducteur ; il est fixé au fond de la cavité 23, en regard de la pastille 21.

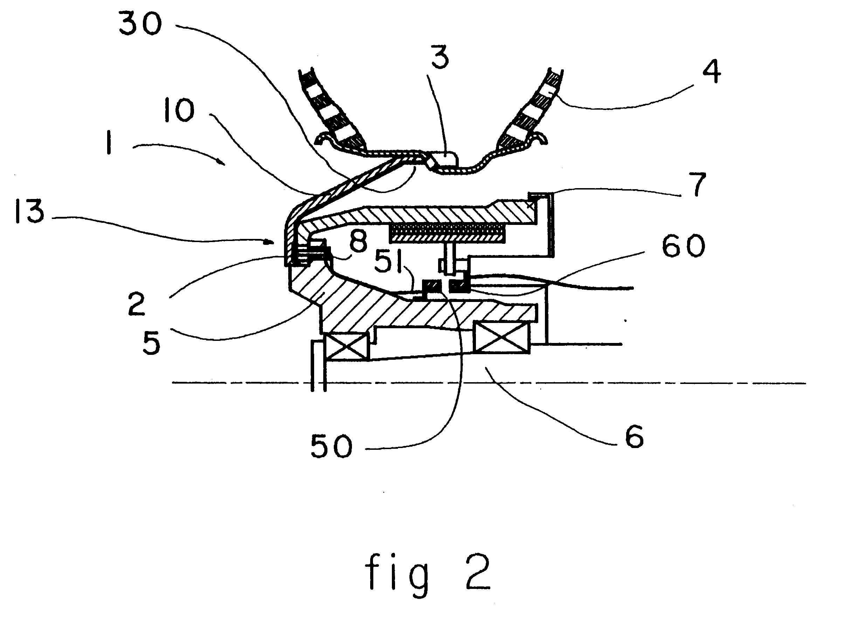

L'implantation sur la roue 1 est illustrée à la figure 2, pour un montage sur Poids lourds. On voit un dispositif 3 comportant les capteurs et les circuits nécessaires pour assurer la surveillance du pneumatique 4. La roue 1 est montée sur un moyeu 5 monté sur le porte moyen 6. Dans l'exemple décrit, le couplage entre l'ensemble mobile en rotation (roue 1 et son pneumatique 4, moyeu 5) et le châssis du véhicule, encore appelé "espace fixe" pour le distinguer de la zone mobile en rotation, est réalisé par des antennes concentriques, l'une 50 tournante et liée au moyeu 5, l'autre 60 fixe et attachée au porte moyen 6. On voit aussi un tambour de frein 7 fixé au moyeu 5. Le connecteur 20 selon l'invention est implanté dans l'épaisseur du disque 10 de la roue 1, sensiblement au niveau de la zone 13 de fixation de la roue 1 sur le moyeu 5, radialement à l'intérieur du cercle formé par les trous de passage des tiges de fixation de la roue sur le moyeu. Un contact associé 8, décrit plus en détail ci-après, est implanté en regard, dans l'épaisseur du moyeu 5 et du tambour de frein 7. Le connecteur 2 est électriquement relié à un fil conducteur 30 rejoignant le dispositif 3 et le contact associé 8 est électriquement relié à un fil conducteur 51 rejoignant l'antenne 50.

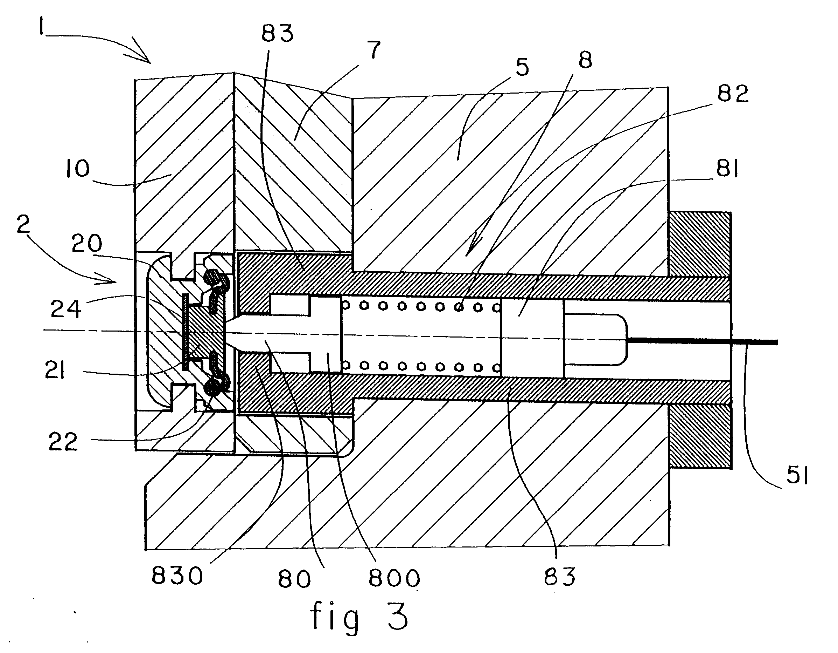

A la figure 3, on voit en détails un ensemble comportant un connecteur électrique, et un contact associé 8, lequel est constitué d'un pointeau 80 conducteur, lié mécaniquement à un appui 81 conducteur via un élément élastique, ledit pointeau 80 et ledit appui 81 étant reliés électriquement, étant disposés dans un chambre isolante, hors de laquelle l'extrémité du pointeau fait saillie sous l'action dudit élément élastique. On voit le pointeau 80 conducteur, conçu pour coopérer avec la pastille 21, ledit pointeau étant lié à l'appui 81 conducteur via un ressort 82 conducteur. Le ressort 82 a une fonction électrique : relier galvaniquement le pointeau 80 et l'appui 81, ainsi qu'une fonction mécanique : conférer au pointeau 80 une force orientée parallèlement à l'axe du moyeu 5, tendant à écarter le pointeau 80 de l'appui 81. L'ensemble appui 81, ressort 82 et pointeau 80 est disposé dans un boîtier isolant 83, rapporté à l'intérieur du tambour de frein 7 et du moyeu 5. Le fil conducteur 51 est connecté à l'appui 81. Le boîtier 83 comporte, du côté axialement extérieur du tambour de frein, un épaulement 830, de sorte que la base 800 du pointeau 80 limite le mouvement de celui-ci vers l'extérieur.

Sur le disque 10 de roue 1, sont disposés autant de connecteurs 2 qu'il le faut pour que, compte tenu du nombre et de la position respective des boulons de fixation (non représentés) de la roue 1 sur le moyeu 5, quelle que soit la position relative sous laquelle on présente la roue 1 au moyeu 5, un connecteur 2 vienne en contact avec la contact associé 8 implanté sur le moyeu 5. Le ressort 82 est taré de telle sorte que le pointeau 80 repousse la pastille 21 vers le pôle 24 et établisse un excellent contact électrique entre pointeau 80 et pastille 21 et entre pastille 21 et pôle 24. Tous les connecteurs 2 implantés sur la roue 1 sont reliés entre eux électriquement par leurs pôles 24, qui sont donc tous sous tension au cours du fonctionnement du dispositif de surveillance 3. Par contre, toutes les pastilles des connecteurs 2 qui ne sont pas branchés au contact associé 8 restent dans la position représentée à la figure 1 et sont donc isolées galvaniquement.

Pour assurer une résistance de contact électrique entre connecteur et contact associé aussi faible que possible, de préférence, le contact associé comporte des moyens pour assurer un mouvement de rotation du pointeau accompagnant le mouvement de translation lorsque l'extrémité en saillie du pointeau entre en contact avec ledit connecteur. Ceci permet un nettoyage des surfaces conductrices assurant le contact galvanique.

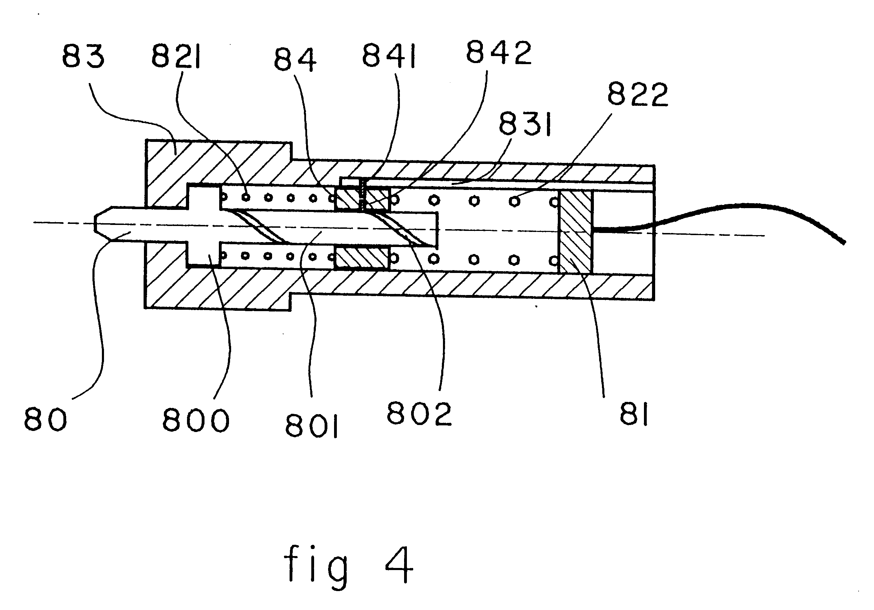

Un contact associé comportant un tel perfectionnement est illustré à la figure 4. On voit que le pointeau 80 comporte une tige 801 le prolongeant du côté opposé à la base 800. La tige 801 comporte un filet 802 à pas très ouvert. Le boîtier isolant 83 comporte une rainure 831 disposée parallèlement à l'axe du boîtier 83. Une pièce de liaison 84 comporte un picot 842 engrené dans le filet 802 et un picot 841 engrené dans la rainure 831. Un premier ressort 821 de raideur $K_1$ est disposé entre la base 800 du pointeau et la pièce de liaison 84. Un second ressort 822 de raideur $K_2$ nettement supérieur à $K_1$ est disposé entre la pièce de liaison 84 et l'appui 81. La conduction galvanique est assurée entre le pointeau 80, l'appui 81 par toute mesure appropriée. Par exemple, les ressorts 821 et 822 et la pièce de liaison sont conducteurs.

Lorsque l'on appuie sur le pointeau 80 lors du branchement du contact 8 au connecteur 2, la raideur $K_2$ du ressort 822 étant beaucoup plus grande que la raideur $K_1$ du ressort 821, la pièce de liaison 84 reste immobile. Il en résulte que tout mouvement de pénétration du pointeau 80 à l'intérieur du boîtier 83 est obligatoirement accompagné d'une rotation du pointeau 80 sur lui-même, rotation qui est imposée par la coopération du pivot 842 immobile et du filet 802. Lorsque la force développée par le ressort 821 atteint et dépasse celle développée par le ressort 822, on lorsque la rotation du pointeau 80 sur lui-même est empêchée, par exemple par un frottement devenu trop important entre la pastille 21 et le pointeau 80, alors le pointeau peut continuer à pénétrer à l'intérieur du boîtier 83 en comprimant le ressort 822 grâce au glissement de la pièce de liaison 84 engrenée par le picot 841 dans la rainure 831.

Pour le montage de roues jumelées, il est proposé une variante du connecteur basée sur le même principe, qui permet la connexion sur les deux faces du disque de roue, via des pastilles qui restent isolées galvaniquement en dehors de tout branchement à un contact associé. Dans ce cas, le connecteur comporte en outre un troisième étage conducteur, qui est, tout comme le second, accessible de l'extérieur.

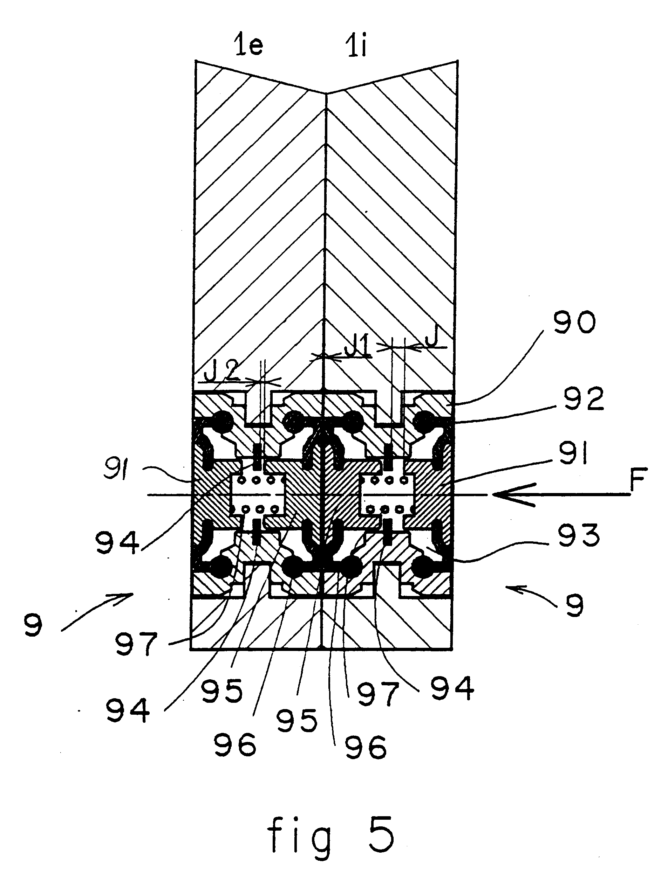

A la figure 5, on voit une roue intérieure 1i, c'est-à-dire destinée à venir en contact avec le moyeu du véhicule, et une roue extérieure 1e. Chaque roue 1i et 1e comporte un connecteur 9 identique. Chaque connecteur 9 est constitué d'un support isolant 90, laissant apparaître sur une face une pastille 91 conductrice constituant ledit second étage conducteur, laissant apparaître sur la face opposée une seconde pastille 95 conductrice constituant ledit troisième étage conducteur, lesdites pastilles 91,95 étant fixées sur ledit support au moyen de membranes 92 élastiques et étanches, ledit support 90 définissant avec lesdites pastilles 91, 95 et lesdites membranes 92 une cavité 93 à l'intérieur de laquelle est fixé un pôle 94 constituant ledit premier étage conducteur.

Dans l'exemple de réalisation illustré par la figure 5, les seconds et troisièmes étages conducteurs sont en permanence reliés électriquement l'un à l'autre, et, en dehors de tout branchement à un contact associé, restent isolés du premier étage conducteur. On voit que les pastilles 91 et 95 sont reliées par un ressort 97 qui assure le contact électrique entre elles et tend à les maintenir écartées l'une de l'autre. Lors du branchement à un contact associé, un effort symbolisé par F est appliqué à la pastille 91 du connecteur 9 implanté sur la roue intérieure 1i. Les jeux $J_1$, $J_2$ et J apparaissant à la figure 5 sont tels que $J_1 + J_2$ est plus petit que J. Le jeu $J_1$ est le jeu subsistant après jumelage entre les pastilles 95 de chacun des contacts 9. Le jeu $J_2$ est le jeu existant à l'intérieur de chaque contact 9 entre les pastilles 95 et le pôle 94, et le jeu J est celui existant dans chacun des contacts 9 entre la pastille 91 et le pôle 94. L'action du contact associé doit permettre, grâce à la déformation du ressort 97 de la roue intérieure 1i, d'établir le contact entre le pôle 94 et la pastille 91 de la roue intérieure, ainsi que le contact entre la même pastille 91 et le pôle 94 de la roue extérieure via le recul des pastilles 95.

Grâce à un tel connecteur, on peut s'affranchir des tolérances de fabrications et de montage des roues, tout en assurant un excellent contact électrique et un branchement automatique. La discrimination entre la roue extérieure et la roue intérieure, si elle est souhaitée, peut être assurée par l'électronique du dispositif de surveillance des pneumatiques. Ou bien l'homme de métier peut très facilement dimensionner les jeux, les élasticités des ressorts et membranes, et éventuellement prévoir des butées limitant certaines courses pour que la discrimination entre roue extérieure et roue intérieure soit assurée par les branchements.On peut aussi remplacer la liaison entre pastilles 91 et 95 par un poussoir élastiquement déformable qui laisse galvaniquement isolées l'une de l'autre les deux pastilles 91 et 95 en dehors de tout branchement et conçu de façon à assurer le contact entre les pastilles 91 et 95 de la roue intérieure après branchement à un contact associé, mais à laisser isolées l'une de l'autre les pastilles 91 et 95 de la roue extérieure tout en assurant le contact avec les pôles 94.

Après montages et branchements, il faut adapter un capot isolant (non représenté) pour couvrir la pastille 91 de la roue extérieure, au moins au niveau du connecteur utilisé. Ou bien on peut utiliser pour la roue extérieure, un connecteur du type illustré dans le premier exemple, en orientant convenablement les pastilles conductrices 21 accessibles de l'extérieur, ou bien encore le connecteur 9 peut être conçu de façon à laisser isolée la pastille 91 de la roue extérieure.

De nombreuses variantes, adaptations, ou applications de l'invention peuvent être conçues à la lumière de cet exposé, sans quitter la portée de l'invention chaque fois que l'on réalise plusieurs étages conducteurs comme explicité. Il est notamment tout à fait possible que les pièces assurant le branchement électrique proprement dit soient réalisées sous forme de fiches mâles et femelles, comme cela est très courant, cette caractéristique étant bien entendu compatible avec la présente invention.

## Revendications

1. Dispositif de connexion comportant au moins deux connecteurs électriques (2, 9) destinés A être reliés de façon permanente en parallèle avec un fil conducteur (30) d'une part, et à réaliser d'autre part une connexion galvanique séparable avec un seul contact associé (8), chaque connecteur électrique comportant deux étages conducteurs, le premier (24, 94) des étages conducteurs étant destiné à être relié audit fil conducteur (30) et étant isolé galvaniquement de l'extérieur du connecteur (2), le second étage conducteur (21, 91), accessible par l'extérieur dudit connecteur, étant destiné à effectuer ladite connexion galvanique séparable, le second étage conducteur (21, 91) étant isolé galvaniquement dudit premier étage conducteur (24, 94) lorsque connecteur et contact associé sont séparés, et étant mis en contact galvanique par le contact associé lorsque connecteur (2, 9) et contact associé (8) sont branchés l'un à l'autre.

2. Dispositif selon la revendication 1, caractérisé en ce qu'il est constitué d'un support isolant (20), laissant apparaître une pastille (21) conductrice constituant ledit second étage conducteur accessible de l'extérieur, ladite pastille (21) étant fixée sur ledit support (20) au moyen d'une membrane (22) élastique et étanche, ledit support (20) définissant avec ladite pastille (21) et la membrane (22) une cavité (23), un pôle (24) constituant ledit premier étage conducteur étant fixé dans la cavité (23) en regard de ladite pastille (21).

3. Dispositif selon la revendication 1, caractérisé en ce qu'il comporte en outre un troisième étage conducteur accessible de l'extérieur.

4. Dispositif selon la revendication 3, caractérisé en ce qu'il est constitué d'un support (90) isolant, laissant apparaître sur une face une pastille (91) conductrice constituant ledit second étage conducteur, laissant apparaître sur la face opposée une seconde pastille (95) conductrice constituant ledit trosième étage conducteur, lesdites pastilles étant fixées sur ledit support (90) au moyen de membranes (92) élastiques et étanches, ledit support définissant avec lesdites pastilles (91, 95) et lesdites membranes (92) une cavité (93) à l'intérieur de laquelle est fixé un pôle (94) constituant ledit premier étage conducteur.

5. Dispositif selon la revendication 4, caractérisé en ce que les deux pastilles (91, 95) sont reliées par un ressort (97) qui assure le contact galvanique entre elles, et tend à les maintenir écartées l'une de l'autre.

6. Ensemble comportant un dispositif (2 ou 9) selon l'une des revendications 1 à 5 et un contact associé (8), caractérisé en ce que le contact associé est constitué d'un pointeau (80) conducteur, lié mécaniquement à un appui (81) conducteur via un élément élastique (82), ledit pointeau (80) et ledit appui (81) étant reliés électriquement et étant disposés dans une chambre isolante (83) hors de laquelle l'extrémité du pointeau (80) fait saillie sous l'action dudit élément élastique (82).

7. Ensemble selon la revendication 6, caractérisé en ce que le contact associé comporte des moyens pour assurer un mouvement de rotation du pointeau accompagnant le mouvement de translation lorsque l'extrémité en saillie du pointeau entre en contact avec ledit connecteur.

**Claims**

1. Electrical connector intended to be permanently connected to a conductive wire from one part, and to realize from the other part a galvanic connection separable with an associated contact, said electrical connector comprising two conductive stages, the first of the conductive stages being intended to be attached to said conductive wire and being galvanically insulated from the exterior of the connector, the second conductive stage, accessible through the exterior of the said connector, being intended to affect the said separable galvanic connection , the second conductive stage being galvanically insulated from said first conductive stage when the connector and associated contact are separate, and being placed in galvanic contact through the associated contact when the connector and associated contact are connected one to the other.

2. Connector according to Claim 1, characterized in that it is formed from an isolating support (20) allowing to appear a conducting capsule (21) constituting the said conductive second stage accessible from the exterior, the said capsule (21) being attached to the said support (20) by means of an elastic and impervious membrane (22), the said support (20) defining with the said capsule (21) and the membrane (22) a cavity (23), a pole (24) forming the said conductive first stage being fixed in the cavity (23) opposite of the said capsule (21).

3. Connector according to Claim 1, characterized in that it comprises in addition a third conductive stage accessible from the exterior.

4. Connector according to Claim 3 characterized in that it is composed of an isolating support (90) forming on the face a conductive capsule (91) constituting the said conductive second stage, allowing to appear on the opposite face a second conductive capsule (95) constituting the said third conductive stage, the said capsules being fixed on the said support (90) by means of the elastic and impervious membranes (92), the said support defining with the said capsules (91, 95) and said membranes (92) a cavity (93) at the interior of which is fixed a pole (94) constituting said first conductive stage.

5. Connector according to Claim 4, characterized in that the two capsules (91, 95) are bound through a spring (97) which ensures the galvanic contact between them, and leads to maintaining them separate one from the other.

6. Assembly comprising an electrical connector (2 or 9) according to any of the Claims 1 to 5 and an associated contact (8), characterized in that the associated contact is comprised of a conductive needle (80), bound mechanically to a conductive support (81) via an elastic element (82), said needle (80) and said support (81) being joined electrically and being disposed in an isolating chamber (83) outside of which the tip of the needle (80) makes a projection under the action of the said elastic element (82).

7. Assembly according to Claim 6, characterized in that the associated contact comprises means for ensuring a rotational movement of the needle accompanying the translational movement when the tip of the needle in projection enters in contact with the said connector.

**Patentansprüche**

1. Verbindungsvorrichtung mit mindestens zwei elektrischen Verbindern (2, 9), die dazu bestimmt sind, einerseits dauerhaft parallel mit einem Leitungsdraht (30) verbunden zu werden und andererseits eine lösbare galvanische Verbindung mit einem einzigen zugehörigen Kontakt (8) herzustellen, wobei jeder elektrische Verbinder zwei Leitungsebenen umfaßt, wobei die erste (24, 94) der Leitungsebenen dazu bestimmt ist, mit dem Leitungs-Draht (30) verbunden zu werden und galvanisch vom Äußeren des Verbinders (2) isoliert ist und die zweite Leitungsebene (21, 91), die von außerhalb des Verbinders zugänglich ist, bestimmt ist, die lösbare galvanische Verbindung zu bewirken, wobei die zweite Leitungsebene (21, 91) von der ersten Leitungsebene (24, 94) galvanisch isoliert ist, wenn Verbinder und zugehöriger Kontakt getrennt sind, und durch den zugehörigen Kontakt in galvanischen Kontakt gebracht werden, wenn Verbinder (2, 9) und zugehöriger Kontakt (8) aneinander angeschlossen werden.

2. Vorrichtung nach Anspruch 1, dadurch gekennzeichnet, daß sie eine isolierende Halterung (20) umfaßt, die eine Anschlußfläche (21) erscheinen läßt, die die von außen zugängliche zweite Leitungsebene bildet, wobei die Anschlußfläche (21) an der Halterung (20) mittels einer elastischen dichten Membran (22) befestigt ist, wobei die Halterung (20) mit der Anschlußfläche (21) und der Membran (22) einen Hohlraum (23) definiert und ein Pol (24), der die erste Leitungsebene bildet, im Hohlraum (23) gegenüber der Anschlußfläche (21) befestigt ist.

3. Vorrichtung nach Anspruch 1, dadurch gekennzeichnet, daß sie zusätzlich eine von außen zugängliche dritte Leitungsebene umfaßt.

4. Vorrichtung nach Anspruch 3, dadurch gekennzeichnet, daß sie aus einer isolierenden Halterung (90) gebildet ist, die an einer Seite eine leitende Anschlußfläche (91) erscheinen läßt, und auf der gegenüberliegenden Seite eine zweite leitende Anschlußfläche (95) erscheinen läßt, die die dritte Leitungsebene bildet, wobei die Anschlußebenen an der Halterung (90) mittels elastischer dichter Membranen (92) befestigt sind, wobei die Halterung mit den Anschlußflächen (91, 95) und den Membranen (92) einen Hohlraum (93) definiert, in dem ein Pol (94) befestigt ist, der die erste Leitungsebene bildet.

5. Vorrichtung nach Anspruch 4, dadurch gekennzeichnet, daß die zwei Anschlußflächen (91, 95) durch eine Feder (97) verbunden sind, die den galvanischen Kontakt zwischen ihnen sicherstellt und sie voneinander beabstandet hält.

6. Anordnung mit einer Vorrichtung (2 oder 9) nach einem der Ansprüche 1 bis 5 und einem zugeordneten Kontakt (8), **dadurch gekennzeichnet,** daß der zugeordnete Kontakt aus einem leitenden spitzen Stift (80) gebildet ist, der mechanisch mit einem leitenden Widerlager (81) über ein elastisches Element (82) verbunden ist, wobei Stift (80) und Widerlager (81) elektrisch verbunden und in einer isolierenden Kammer (83) angeordnet sind, außerhalb derer das Ende des Stifts (80) unter Wirkung des elastischen Elements (82) vorspringt.

7. Anordnung nach Anspruch 6, dadurch gekennzeichnet,

daß der zugeordnete Kontakt Mittel umfaßt, um eine Drehbewegung des Stifts in Verbindung mit der Translationsbewegung sicherzustellen, wenn das vorspringende Ende des Stifts in Kontakt mit dem Verbinder kommt.

10

11

12

12

20

2

22

21

24

23

fig 1

fig 2

fig 3

EP 0 412 444 B1

EP 0 412 444 B1

83  821    84   841    842
                            831      822

80   800   801   802        81

fig 4

EP 0 412 444 B1

fig 5